# FASCICULE DE BREVET EUROPEEN

(11) **EP 3 194 104 B1**
(45) Date de publication et mention de la délivrance du brevet: **01.12.2021**
(21) Numéro de dépôt: 15770575.7
(22) Date de dépôt: 11.09.2015
(51) Int. Cl.: B23K 11/00, B23K 11/11, B23K 26/24

(54) **PROCÉDÉ D'ASSEMBLAGE DE DEUX PIÈCES EN TÔLE TELLES QUE DES PIÈCES DE CARROSSERIE POUR VÉHICULE.**
VERFAHREN ZUR ANORDNUNG VON ZWEI BLECHKOMPONENTEN WIE ETWA FAHRZEUGKAROSSERIEKOMPONENTEN
METHOD OF ASSEMBLING TWO SHEET METAL COMPONENTS SUCH AS VEHICLE BODYWORK COMPONENTS

(30) Priorité: 16.09.2014 FR 1458694
(43) Date de publication de la demande: 26.07.2017
(73) Titulaire: PSA Automobiles SA, 78300 Poissy (FR)
(72) Inventeur: LENOIR, Romaric, F-78560 Le Port Marly (FR)
(74) Mandataire: Fernandez, Francis Lionel
(86) Numéro de dépôt international: PCT/FR2015/052435
(87) Numéro de publication internationale: WO 2016/042240

(56) Documents cités:
- EP-A1- 1 782 908
- DE-A1-102007 022 134
- JP-A- H07 314 172
- JP-A- 2004 082 136
- JP-A- 2008 043 985
- US-A1- 2007 175 867

## Description

La présente invention concerne un procédé d'assemblage de deux pièces en tôle telles que des pièces de carrosserie pour véhicule.

Il est courant dans l'industrie automobile de réaliser des assemblages de pièces en tôle par soudage et/ou par collage. De telles pièces en tôle quand elles servent de pièces de carrosserie doivent en outre répondre à des exigences de tenue mécanique et de rigidité.

Aussi, afin de gagner en rigidité, on a développé l'utilisation du collage dit structural à l'aide d'adhésifs de type colle époxy ou polyuréthane élastomère dans l'industrie automobile.

En général, l'encollage des pièces et leur assemblage ne devient définitif que lors de la polymérisation (durcissement) de la colle. Dans le cadre de l'industrie automobile, cet encollage et cet assemblage interviennent lors des étapes de ferrage pendant lesquelles on assemble la caisse dite ferrée. La polymérisation de la colle intervient le plus souvent au moment de l'étape de cataphorèse au niveau de l'atelier de peinture, mais certains types de colle peuvent polymériser à température ambiante. Il est donc nécessaire de pouvoir maintenir les pièces encollées immobiles l'une par rapport à l'autre tant que la polymérisation de la colle n'est pas intervenue.

Ce maintien des pièces encollées immobiles les unes par rapport aux autres intervient donc sur un temps assez long et notamment pendant tout le processus de fabrication de la caisse ferrée. Il est donc nécessaire de pouvoir garantir ce maintien et on doit alors utiliser un autre procédé d'assemblage pour fixer les pièces l'une par rapport à l'autre tant que le durcissement de la colle n'est pas intervenu.

Il est donc habituel d'assembler des pièces en tôle en formant d'abord un joint de colle déposé de manière linéaire et continue puis de réaliser des points de soudure électrique (PSE) au travers du joint de colle ainsi formé en vue de garantir le maintien des pièces assemblées jusqu'au moment de la polymérisation de la colle.

Lors du processus de soudage, on doit atteindre une température équivalente à la température du point de fusion du métal à souder, par exemple une température de 1600°C pour l'acier. Le dégagement de chaleur qui intervient de ce fait autour du point de soudure génère des inconvénients tels qu'une dégradation des propriétés de rigidité de la colle à travers laquelle on a opéré la soudure ainsi que des dégagements de produits toxiques liés à la dégradation de la colle par brûlage.

On a ainsi pu observer une perte de 35% de la rigidité entre un assemblage réalisé avec une colle seule et un assemblage réalisé avec une colle plus une soudure électrique par point. Par ailleurs, la formation de poussières brûlées et de formaldéhydes nécessite la mise en œuvre de systèmes d'aspiration contraignants et coûteux et dont l'efficacité reste partielle.

En outre, la colle présente une mauvaise conductibilité électrique ce qui engendre des perturbations ou interruptions dans le procédé de soudage par résistance et peut même générer des défauts du type flash (c'est-à-dire une expulsion et un crachement du point de soudure).

Dans US2007/0175867, on a proposé de réaliser une fixation par soudage renforcé par un collage, la colle étant polymérisée par points et le soudage étant également réalisé par points à l'aide de la même électrode mais à des emplacements différents, toutefois les points de soudure sont réalisés au travers de la colle déposée générant là encore les mêmes inconvénients lors du soudage.

Dans JP 07-314172, on a proposé de réaliser un assemblage entre deux éléments dans lequel à la fin d'une ligne de colle, on réalise un point de soudure terminal.

De manière à éviter ces inconvénients, on a proposé de réaliser dans EP 1 782 908, un procédé d'assemblage alliant un collage réalisé entre le bord des deux tôles assemblées, combiné à un soudage par résistance électrique, ménagé à l'écart dudit bord et de la ligne de collage. Le préambule de la revendication 1 est basé sur ce document. Bien qu'évitant de réaliser le soudage électrique par point dans le collage, ce procédé présente l'inconvénient d'utiliser une largeur d'assemblage trop importante et, de fait, d'être trop coûteux en matière.

On a proposé également de réaliser un assemblage de pièces en tôles alliant collage et soudage par résistance par point tel que décrit dans EP 1 660 270 dans lequel l'une des pièces à assembler présente des renfoncements formant par assemblage sur l'autre pièce des logements dans lesquels une colle peut être introduite tandis que, entre les renfoncements, on réalise des points de soudure électrique. Un tel procédé permet donc d'éliminer les inconvénients liés à un soudage au travers d'un cordon de colle puisque les parties encollées de l'assemblage sont distinctes des parties soudées. Cependant, on a pu constater qu'au niveau du collage, la présence des logements d'accueil de la colle génère une certaine épaisseur de colle qui perturbe les propriétés de rigidité de la pièce obtenue à l'aide de ce procédé.

La présente invention a donc pour but de pallier l'ensemble de ces inconvénients et de proposer un procédé d'assemblage qui, tout en alliant un soudage par point à un collage, permet de supprimer les inconvénients liés notamment au brûlage de la colle tout en conservant les propriétés de l'assemblage réalisé, en particulier en ce qui concerne la rigidité de la pièce de carrosserie de véhicule ainsi obtenue.

A cet effet, l'invention a pour objet un procédé d'assemblage de deux éléments en tôle métallique, comprenant la dépose d'un cordon de colle sur un premier élément, puis l'assemblage du deuxième élément en tôle métallique sur le premier et la fixation par réalisation de points de soudure pour maintenir immobiles les deux éléments en tôle métallique avant de procéder au durcissement de la colle, caractérisé en ce que le cordon de colle est déposé de manière discontinue selon une ligne d'encollage sur le premier élément en tôle métallique, puis une fois le second élément en tôle métallique appliqué contre le premier, les deux éléments sont maintenus fixes l'un par rapport à l'autre par réalisation de points de soudure au niveau de tronçons dépourvus de colle de la ligne d'encollage discontinue.

Ainsi de manière avantageuse, les points de soudure sont réalisés selon la ligne d'encollage mais en-dehors de la colle déposée ce qui permet d'éviter tous les risques d'émanation liés au brûlage de la colle. En outre la colle étant emprisonnée entre les deux éléments de tôle assemblés, l'assemblage ainsi réalisé peut subir les étapes du processus de cataphorèse ultérieur sans risque que la colle ne soit chassée lors d'étapes de lavage comme cela serait le cas si la colle avait été logée dans des renfoncements ouverts d'un élément de tôle tel que décrit dans EP 1 660 270.

De préférence, les points de soudure sont réalisés par un soudage par résistance électrique par point (encore appelé point soudure électrique PSE), par un soudage par point au laser. Ces points de soudure sont ainsi réalisés par transparence sur les deux éléments assemblés. Ces points de soudure sont réalisés de préférence dans l'alignement du cordon d'encollage ce qui ne nécessite pas d'utiliser une grande largeur de surface des éléments pour l'assemblage. Toutefois, il est possible de réaliser ces points de soudure également selon une ligne de soudure alignée avec la ligne d'encollage mais écartée de celle-ci d'un intervalle par exemple d'au plus 5 mm.

L'invention permet donc d'obtenir un cordon de colle structurale avec soudage ne présentant aucun des inconvénients précités mais qui, en outre, permet de fixer la géométrie de l'assemblage tant que la colle n'est pas polymérisée. On conserve en outre l'ensemble des qualités de rigidité demandées en mettant en oeuvre un soudo-collage défini en associant des points de soudure par résistance, laser, avec un cordon de colle structurale discontinu à l'interface entre les pièces ou éléments assemblés.

Selon une forme de réalisation préférée de l'invention, on doit déposer un cordon de colle de manière à obtenir un jeu entre les deux éléments de tôle compris entre 0,1 et 2 mm, de préférence compris entre 0,2 et 0,3 mm. La valeur de jeu optimale est valable par rapport à la performance de tenue mécanique de la liaison. Lorsque l'épaisseur de colle croît, la performance de tenue à la rupture diminue, notamment pour les sollicitations de type cisaillement. Il est donc nécessaire de maîtriser les jeux et épaisseurs de ces liaisons afin de conserver un bon niveau de prestation.

La colle est donc déposée de manière à former une ligne d'encollage discontinue formée de « tirets » de colle déposés entre lesquels des soudures sont réalisées. Ces tirets de colle peuvent être rectilignes ou courbes, pouvant notamment suivre la forme du bord d'assemblage. Au moins un point de soudure peut être réalisé dans chaque tronçon de la ligne d'encollage exempt de colle, entre deux tirets de colle, ou bien selon une fréquence différente, telle qu'un point de soudure dans un tronçon tous les deux tirets de colle, etc. On peut également envisager de réaliser plus d'un point de soudure dans un tronçon sans colle entre deux tirets de colle.

Le procédé selon l'invention est particulièrement avantageux dans le cadre de l'assemblage d'éléments de structure en tôle destinés à constituer une caisse de véhicule automobile. L'invention a donc pour objet également une caisse de véhicule automobile constituée au moins en partie d'éléments assemblés selon le procédé selon l'invention ainsi qu'un véhicule automobile constitué au moins en partie d'éléments en tôle (éléments de structure, élément de carrosserie) assemblés selon le procédé de l'invention, en particulier un véhicule automobile pourvu d'une telle caisse. En effet, le soudage par point permet de maintenir les pièces encollées immobiles les unes par rapport aux autres lors de la phase d'assemblage des éléments constituant la caisse dans l'atelier de ferrage et de fixer ainsi la géométrie de l'assemblage avant que la colle ne soit durcie par polymérisation dans l'atelier de peinture au moment du procédé dit de cataphorèse. Certaines colles utilisées peuvent polymériser à température ambiante.

Le procédé selon l'invention permet de garantir la maîtrise des propriétés mécaniques du joint de colle (celui-ci n'étant plus dégradé comme cela pouvait être le cas lors du soudage), l'absence d'aléas lors de la réalisation des points de soudure comme cela était le cas pour ceux réalisés dans le joint de colle et on évite en outre le rejet de produits toxiques dans l'atmosphère qui était lié au brûlage garantissant ainsi la sécurité des opérateurs à proximité.

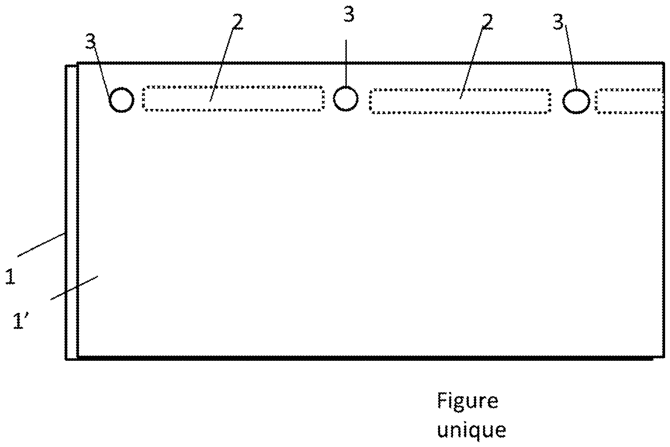

On décrira maintenant l'invention plus en détail en référence au dessin dans lequel la figure unique représente une vue en plan du bord d'un assemblage réalisé selon l'invention.

Dans le processus de la fabrication d'un véhicule automobile, l'assemblage des éléments en tôle pour former la caisse ferrée est effectué par collage dit structural permettant d'accroitre la rigidité des éléments de carrosserie ainsi formés. De manière à maintenir les éléments encollés immobiles les uns par rapport aux autres et fixer ainsi la géométrie des éléments de carrosserie jusqu'au moment du durcissement de la colle lors du processus de cataphorèse, on réalise un soudage par point de ces éléments.

A cet effet, on dépose un cordon de colle de manière discontinue sur un élément en tôle 1, on assemble dessus un second élément en tôle 1' et on réalise un soudage par résistance par point des deux éléments en tôle 1, 1' dans les espaces ou tronçons 2' exempts de colle du cordon ou joint de colle discontinu. Ainsi, comme on peut le voir sur la figure unique la ligne d'assemblage entre les deux éléments en tôle 1, 1' est constituée de tronçons ou tirets de colle 2 entre lesquels se situent des points de soudure électrique 3, tel que par exemple un tiret de colle, un point de soudure, un tiret de colle, un point de soudure, etc.

Les tronçons 2 de cordon de colle déposés sont calibrés en fonction du type de colle (époxy, polyuréthane) pour que, lors de l'assemblage, le cordon de colle 2 forme un film entre les deux éléments 1, 1' dont l'épaisseur se situe entre de préférence 0,2 et 0,3 mm, ce qui correspond à un jeu entre les éléments en tôle 1, 1' compris entre 0,2 et 0,3 mm. De préférence, le diamètre du cordon de colle déposé correspond au jeu après assemblage entre les éléments auquel on ajoute 2 mm.

Ce jeu entre les éléments à assembler s'il est trop important (supérieur à 1 mm), provoque une perte de rigidité du collage ainsi réalisé. En outre, si ce jeu dépasse les 2 mm, il existe des risques de lavage de la colle (colle chassée) lors de l'étape de lavage du processus de cataphorèse.

De même le pas de dépose des tronçons 2 de cordon de colle est choisi de sorte que la dispersion de la colle lors de l'assemblage et donc de l'étalement de la colle entre les deux éléments laisse un espace 2' exempt de colle pour réaliser un point de soudure par résistance électrique 3. Ainsi, on synchronise la position des tronçons de cordon de colle 2 avec la position des points de soudure 3. On garantit ainsi que les points de soudure 3 ne seront pas réalisés sur le cordon de colle.

Ainsi, à titre d'exemple, on pourra déposer des tronçons de cordon de colle 2 d'une longueur de 120 mm et ménager des tronçons 2' exempts de colle d'une longueur de 15 à 20 mm.

De préférence, on réalise des tirets de colle présentant une longueur comprise entre 20 et 200 mm et les tronçons exempts de colle d'une longueur comprise entre 15 et 50 mm. On peut ainsi également envisager de réaliser de réaliser le point de soudure à une distance de 15 à 25 mm d'un tiret de colle, soit un tronçon sans colle de 30 à 50 mm entre deux tirets de colle qui se suivent.

Le cordon de colle une fois écrasé par assemblage entre les deux éléments présente de préférence une largeur d'au moins 10 mm.

Le procédé d'assemblage de l'invention permet donc de réaliser lors de l'étape de ferrage une caisse ferrée qui conserve toute sa géométrie. La caisse ferrée est ensuite amenée à l'étape de cataphorèse où la colle sera polymérisée, fixant l'assemblage de manière définitive.

## Revendications

1. Procédé d'assemblage de deux éléments en tôle métallique (1, 1') comprenant la dépose d'un cordon de colle sur un premier élément, l'assemblage du deuxième élément en tôle métallique sur le premier et la fixation par réalisation de points de soudure pour maintenir immobiles les deux éléments de tôle métallique avant de procéder au durcissement de la colle, **caractérisé en ce que** le cordon de colle est déposé de manière discontinue selon une ligne d'encollage sur le premier élément (1) en tôle métallique, puis une fois le second élément en tôle métallique (1') appliqué contre le premier, les deux éléments (1, 1') sont maintenus fixes l'un par rapport à l'autre par réalisation de points de soudure (3) au niveau de tronçons (2') dépourvus de colle de la ligne d'encollage discontinue.

2. Procédé d'assemblage selon la revendication 1, **caractérisé en ce que** les deux éléments de tôle (1, 1') assemblés par la colle présente un jeu compris entre 0,1 et 2 mm.

3. Procédé d'assemblage selon la revendication 1, **caractérisé en ce que** le jeu est compris entre 0,2 et 0,3 mm.

4. Procédé d'assemblage selon l'une des revendications 1 à 3, **caractérisé en ce que** la colle est du type époxy, polyuréthane.

5. Procédé d'assemblage selon l'une des revendications 1 à 4, **caractérisé en ce que** le soudage par point est un soudage par résistance électrique.

6. Procédé d'assemblage selon l'une des revendications 1 à 4, **caractérisé en ce que** le soudage par point est un soudage par laser.

7. Procédé d'assemblage selon l'une des revendications 1 à 6, **caractérisé en ce que** les tirets de colle présentent une longueur comprise entre 20 et 200 mm et les tronçons exempts de colle une longueur comprise entre 15 et 50 mm.

8. Procédé d'assemblage selon l'une des revendications 1 à 7, **caractérisé en ce que** le cordon de colle écrasé par assemblage entre les deux éléments présente de préférence une largeur d'au moins 10 mm.

9. Caisse de véhicule automobile, **caractérisé en ce qu'**elle est constituée au moins en partie d'éléments en tôle assemblés selon le procédé d'assemblage d'éléments en tôle métallique selon l'une des revendications 1 à 8.

10. Véhicule automobile, **caractérisé en ce qu'**il est constitué au moins en partie d'éléments en tôle assemblés selon le procédé selon l'une des revendications 1 à 8.

## Patentansprüche

1. Verfahren zum Verbinden von zwei Metallblechelementen (1, 1'), umfassend das Aufbringen einer Kleberraupe auf ein erstes Element, das Verbinden des zweiten Metallblechelements auf das erste und das Befestigen durch Herstellen von Schweißpunkten, um die beiden Metallblechelemente vor dem Aushärten des Klebers unbeweglich zu halten, **dadurch gekennzeichnet, dass** die Kleberraupe diskontinuierlich entlang einer Klebelinie auf das erste Metallblechelement (1) aufgebracht wird, und dass nach dem Anlegen des zweiten Metallblechelements (1') an das erste die beiden Elemente (1, 1') unbeweglich gehalten werden durch Bildung von Schweißpunkten (3) an kleberfreien Abschnitten (2') der diskontinuierlichen Leimlinie.

2. Montageverfahren nach Anspruch 1, **dadurch gekennzeichnet, dass** die beiden durch den Klebstoff zusammengefügten Blechelemente (1, 1') ein Spiel zwischen 0,1 und 2 mm aufweisen.

3. Montageverfahren nach Anspruch 1, **dadurch gekennzeichnet, dass** das Spiel zwischen 0,2 und 0,3 mm liegt.

4. Montageverfahren nach einem der Ansprüche 1 bis 3, **dadurch gekennzeichnet, dass** der Klebstoff vom Typ Epoxy, Polyurethan ist.

5. Fügeverfahren nach einem der Ansprüche 1 bis 4, **dadurch gekennzeichnet, dass** das Punktschweißen ein elektrisches Widerstandsschweißen ist.

6. Fügeverfahren nach einem der Ansprüche 1 bis 4, **dadurch gekennzeichnet, dass** das Punktschweißen ein Laserschweißen ist.

7. Montageverfahren nach einem der Ansprüche 1 bis 6, **dadurch gekennzeichnet, dass** die Klebestreifen eine Länge zwischen 20 und 200 mm und die kleberfreien Abschnitte eine Länge zwischen 15 und 50 mm aufweisen.

8. Montageverfahren nach einem der Ansprüche 1 bis 7, **dadurch gekennzeichnet, dass** die zwischen den beiden Elementen zusammengepresste Kleberraupe vorzugsweise eine Breite von mindestens 10 mm aufweist.

9. Kraftfahrzeugkarosserie, **dadurch gekennzeichnet, dass** sie zumindest teilweise aus nach dem Verfahren der Verbindung von Metallblechelementen nach einem der Ansprüche 1 bis 8 zusammengesetzten Blechelementen besteht.

10. Kraftfahrzeug, **dadurch gekennzeichnet, dass** es zumindest teilweise aus nach dem Verfahren nach einem der Ansprüche 1 bis 8 zusammengesetzten Blechteilen besteht.

## Claims

1. Method for assembling two metal sheet elements (1, 1'), comprising depositing a bead of glue on a first element, assembling the second metal sheet element on the first element and fixing by making weld points to hold the two metal sheet elements immobile before proceeding to the hardening of the glue, **characterized in that** the bead of glue is deposited discontinuously along a glue line on the first metal sheet element (1), and then, once the second metal sheet element (1') is applied against the first, the two elements (1, 1') are kept fixed one with respect to the other by producing weld points (3) at sections (2') without glue of the discontinuous sizing line.

2. A joining method according to claim 1, **characterized in that** the two sheet metal elements (1, 1') joined by the adhesive have a clearance of between 0.1 and 2 mm.

3. Assembly method according to claim 1, **characterized in that** the clearance is between 0.2 and 0.3 mm.

4. Assembly process according to one of Claims 1 to 3, **characterized in that** the adhesive is of the epoxy, polyurethane type.

5. Assembly method according to one of claims 1 to 4, **characterized in that** the spot welding is an electric resistance welding.

6. Assembly method according to one of claims 1 to 4, **characterized in that** the spot welding is laser welding.

7. A joining method according to any one of claims 1 to 6, **characterized in that** the adhesive indents have a length of between 20 and 200 mm and the adhesive-free sections have a length of between 15 and 50 mm.

8. Assembly method according to one of Claims 1 to 7, **characterized in that** the adhesive strip which is crushed by assembly between the two elements preferably has a width of at least 10 mm.

9. Motor vehicle body, **characterized in that** it consists at least in part of sheet metal elements assembled according to the method of assembling metal sheet elements according to one of Claims 1 to 8.

10. Motor vehicle, **characterized in that** it consists at least in part of sheet metal elements assembled according to the method according to one of Claims 1 to 8.
